# EUROPÄISCHE PATENTANMELDUNG

(11) **EP 4 496 018 A1**
(43) Veröffentlichungstag der Anmeldung: **22.01.2025**
(21) Anmeldenummer: 23186906.6
(22) Anmeldetag: 21.07.2023
(51) Int. Cl.: H01M 4/04, H01M 4/139, H01M 4/66, H01M 10/0525

(54) **VERFAHREN UND ANORDNUNG ZUR BESCHICHTUNG EINER METALLFOLIE IM RAHMEN EINES BATTERIEHERSTELLUNGSPROZESSES**

(71) Anmelder: Siemens Aktiengesellschaft, 80333 München (DE)
(72) Erfinder: Mack, Christian, 91056 Erlangen-Dechsendorf (DE); Schulte, Sascha, 91315 Höchstadt (DE); Albrecht, Andreas, 89081 Ulm (DE); Katzer, Felix, 90763 Fürth (DE); Pohle, Roland, 85570 Herdweg (DE); Radinger, Hannes, 90459 Nürnberg (DE)
(74) Vertreter: Siemens Patent Attorneys

(57) **Zusammenfassung**

Die Erfindung betrifft ein Verfahren zur Beschichtung einer Metallfolie im Rahmen eines Batterieherstellungsprozesses, bei dem in einem ersten Teilprozess zur Beschichtung einer ersten Seite der Metallfolie mit zumindest einer nassen ersten Paste, nach Beschichtung mit der ersten Paste ein erster Trocknungsvorgang derart erfolgt, dass die Trocknung der ersten Paste der beschichteten Metallfolie kurz vor Erreichen einer vollständigen Trocknung abgebrochen wird und in einem zweiten Teilprozess zur Beschichtung einer der ersten Seite gegenüberliegenden zweite Seite der Metallfolie mit zumindest einer nassen zweiten Paste, nach Beschichtung ein zweiter Trocknungsvorgang derart durchgeführt wird, dass die erste Paste derart gerichtet beheizt wird, dass die erste Paste und die zweite Paste vollständig getrocknet werden. Ferner betrifft die Erfindung eine Anordnung mit Mitteln zur Durchführung des Verfahrens.

## Beschreibung

Die Erfindung betrifft ein Verfahren zur Beschichtung einer Metallfolie im Rahmen eines Batterieherstellungsprozesses gemäß dem Gattungsbegriff des Anspruchs 1 sowie eine Anordnung zur Beschichtung einer Metallfolie im Rahmen eines Batterieherstellungsprozesses gemäß dem Oberbegriff des Anspruchs 11.

Es ist bekannt, dass bei der Produktion von Batteriezellen (und vergleichbar aufgebauten Flächenelementen) die Elektroden der Batterie zunächst auf langen Bahnen metallischer Folien beschichtet und erst später zu Zellen verarbeitet werden.

Diese Beschichtung erfolgt in der Regel durch das Auftragen einer nassen Paste auf eine Metallfolie, beispielsweise Mischungen aus Graphit, Bindemitteln und Lösemitteln und gegebenenfalls weiterer Bestandteile. Die Paste muss dabei in einem unmittelbar folgenden Prozessschritt getrocknet werden, damit sie ihre mechanischen und elektrochemischen Eigenschaften erhält.

Während der Trocknung durchläuft die eingangs noch nasse Paste verschiedene, in der Fachliteratur gut dokumentierte, Phasen, die durch verschiedene Eigenschaften definiert sind.

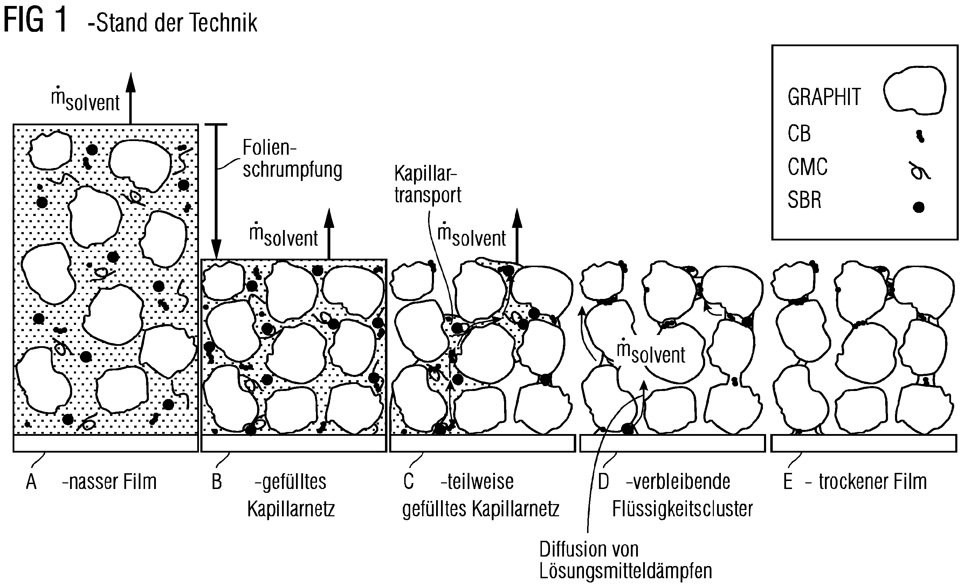

Als Beispiel hierfür sind in Figur 1 aus Jana Kumberg et al. (2019). Drying of Lithium-Ion Battery Anodes for Use in High Energy Cells - Influence of Electrode Thickness on Drying Time, Adhesion and Crack Formation. Energy Technology. 7.10.1002/ente.201900722 bekannte Trocknungsphasen A bis E dargestellt.

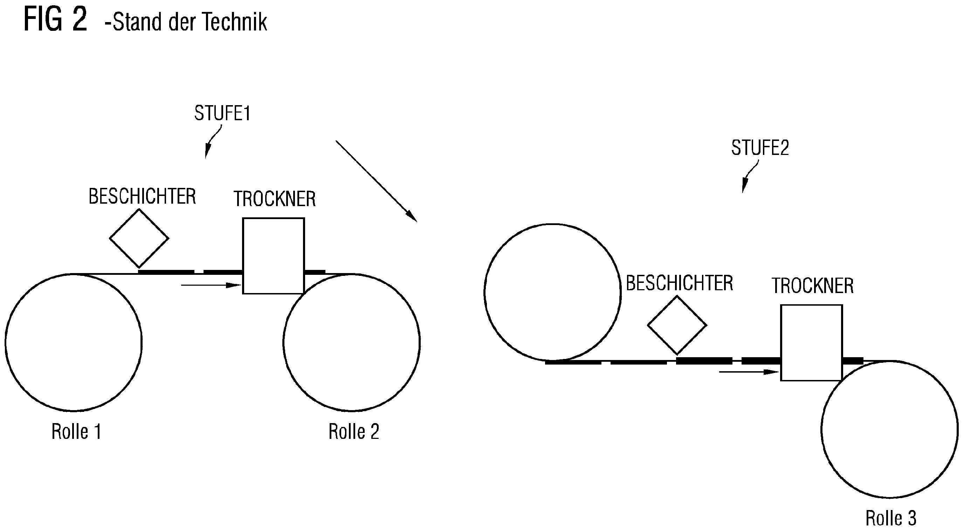

Es ist ferner bekannt, dass bei handelsüblichen Batteriezellen die Metallfolien beidseitig mit Aktivmaterial beschichtet werden. Mit einigen Ausnahmen erfolgt dies üblicherweise in einem zweistufigen Verfahren, wie es in Figur 2 dargestellt ist, bei dem zunächst eine Seite beschichtet und getrocknet wird, dann aufgewickelt und später die einseitig beschichtete Folie von der anderen Seite erneut beschichtet wird.

Nachteilig ist, dass die erste Beschichtung zweimal getrocknet wird und im fertig ausgetrockneten Zustand einmal mehr aufgewickelt wird. Die doppelte Trocknung kostet Energie und kann potenziell das Material schädigen, wenn es zu einer starken Übertrocknung kommt. Besonders trockenes, sprödes Material kann beim Wickelvorgang geschädigt werden.

Die der Erfindung zugrundeliegende Aufgabe ist es eine technische Lösung für die Produktion von Batteriezellen anzugeben, die die Nachteile des Standes der Technik überwindet, insbesondere eine energiesparende Produktion ermöglicht.

Diese Aufgabe wird durch das Verfahren zur Beschichtung einer Metallfolie im Rahmen eines Batterieherstellungsprozesses ausgehend von den Merkmalen gemäß dem Gattungsbegriff des Anspruchs 1, durch dessen Merkmale sowie durch die Anordnung ausgehend von den Merkmalen des Oberbegriffs des Anspruchs 11, durch dessen kennzeichnende Merkmale gelöst.

Bei dem erfindungsgemäßen Verfahren zur Beschichtung einer Metallfolie im Rahmen eines Batterieherstellungsprozesses, erfolgt in einem ersten Teilprozess zur Beschichtung einer ersten Seite der Metallfolie mit zumindest einer nassen ersten Paste, nach Beschichtung mit der ersten Paste ein erster Trocknungsvorgang derart, dass die Trocknung der ersten Paste der beschichteten Metallfolie kurz vor Erreichen einer vollständigen Trocknung abgebrochen wird und in einem zweiten Teilprozess zur Beschichtung einer der ersten Seite gegenüberliegenden zweite Seite der Metallfolie mit zumindest einer nassen zweiten Paste, nach Beschichtung ein zweiter Trocknungsvorgang derart durchgeführt wird, dass die erste Paste derart gerichtet beheizt wird, dass die erste Paste und die zweite Paste vollständig getrocknet werden.

Das erfindungsgemäße Verfahren zeichnet sich unter anderem durch den Vorteil aus, dass eine Übertrocknung der ersten Beschichtung vermieden werden kann. Ferner spart dies auch Energie, da erfindungsgemäß ja eine vollständige Trocknung der ersten Paste im Rahmen des ersten Trocknungsprozesses vermieden wird und somit tendenziell weniger Energie in die Paste eingebracht bzw. eingetragen wird, als es gemäß Stand der Technik erfolgt. Dennoch wird durch die Erfindung dafür gesorgt, dass nach Abschluss des ersten und zweiten Trocknungsvorgangs die Schichten trocken sind. Dabei kann durch die auf die zweite Paste gerichtete Trocknung die erste Paste indirekt, beispielsweise durch Wärmeleitung, mitgetrocknet werden. In jedem Fall wird durch diese indirekte Trocknung aber erneut Energie gespart und eine Übertrocknung der ersten Paste durch den zweiten Trocknungsvorgang vermieden. Insbesondere durch die nicht ganz vollständige Trocknung bzw. Beibehaltung einer minimalen Restfeuchte im Rahmen des ersten Trocknungsvorgangs aber auch das Vermeiden der Übertrocknung behält die beschichtete Metallfolie sowohl mit der ersten als auch mit beiden Beschichtungen eine Flexibilität, die eine Beschädigung der Metallfolie, insbesondere bei einem Auf- und/oder Abrollvorgang auf eine Rolle, vermeidet.

Durch Auftragen mehr als einer ersten nassen Paste oder mehr als einer zweiten Paste auf jeweils beiden Seiten, wie es der Gegenstand des Anspruch zulässt und somit auf beiden Seiten der Metallfolie eine mehrstufige Beschichtung aufgebracht ist, kann eine Kompensation der "Bindermigration", also des unerwünschten Transportes der Binder von den tiefen, Foliennahen Schichten hin zur Oberfläche, welcher durch Sogeffekte beim Verdunsten der Lösemittel an der Oberfläche hervorgerufen wird, erreicht werden, wenn dieses Mehrschichtverfahren derart eingesetzt wird, dass in tiefen Bereichen eine überdosierte Menge an Binder beigemischt wird, so dass nach der Bindermigration das gewünschte, korrekte Verhältnis vorzufinden ist.

Die erfindungsgemäße Anordnung zur Durchführung der Beschichtung einer Metallfolie im Rahmen eines Batterieherstellungsprozesses ist gekennzeichnet mit Mitteln zur Durchführung des Verfahrens und/oder einer seiner Weiterbildungen.

Die erfindungsgemäße Anordnung ermöglicht die Implementierung des erfindungsgemäßen Verfahrens und/oder seiner Weiterbildungen und damit mutatis mutandis auch die Realisierung der Vorteile des Verfahrens und/oder seiner Weiterbildungen.

Vorteilhafte Ausgestaltungen und Weiterbildungen der Erfindung sind durch die Unteransprüche angegeben.

Die energiesparende und die Übertrocknung vermeidende Wirkung der gerichteten Trocknung wird am besten realisiert, wenn das erfindungsgemäße Verfahren derart weitergebildet wird, dass das gerichtete Beheizen derart durchgeführt wird, dass ein auf die erste Paste örtlich und/oder direktional begrenzter erster Energieeintrag erfolgt. Die örtliche und direktionale Begrenzung erlaubt es zudem die Erfindung in einem industriellen Umfeld einzusetzen, in dem in der Regel ein langlaufendes Metallfolienband bearbeitet wird, indem Abschnitte des Bandes einzelnen Prozessen der Fertigung unterworfen werden.

Das erfindungsgemäße Verfahren kann ferner derart weitergebildet werden, dass der erste Energieeintrag durch eine erste gerichtete Bestrahlungseinrichtung, insbesondere mittels eines Infrarotstrahlers, Laserstrahler und vergleichbarer Strahler, erfolgt. Diese Geräte sind als verbreitete und erprobte Geräte und mit den für die Erfindung notwendigen Eigenschaften bekannt und besonders, insbesondere aufgrund der Präzision direktionaler, örtlicher Begrenzung bzw. allgemeiner Begrenzung/Steuerung des Energieeintrags, durch die abgestrahlte Heizenergie.

Alternativ oder ergänzend kann das erfindungsgemäße Verfahren derart weitergebildet werden, dass zumindest zeitnah, insbesondere zeitgleich zum ersten Energieeintrag, ein zweiter Energieeintrag durch eine zweite auf die erste Paste gerichtete Bestrahlungseinrichtung, insbesondere mittels eines Infrarotstrahlers, Laserstrahler und vergleichbarer Strahler, insbesondere örtlich und/oder direktional begrenzt, erfolgt. Hierdurch kann, falls beispielsweise eine Wärmeleitung grundsätzlich nicht ausreicht, die erste Paste zusätzlich unter Vermeidung von Übertrocknung beheizt und getrocknet werden. Dies kann auch eingesetzt werden, wenn eine Restfeuchte spontan, also nicht grundsätzlich, auftritt und dies festgestellt wird.

Vorzugsweise wird das erfindungsgemäße Verfahren derart weitergebildet, dass der erste Trocknungsvorgang bei Erreichen eines vorgebbaren Feuchtegrads abgebrochen wird. Dies gewährleistet gleichbleibende, insbesondere optimierte, Ergebnisse bei der Produktion. Beispielsweise kann es sich um einen Feuchtegrad handeln, der mittels Optimierungsverfahren, wie "Trial and Error", Simulation und/oder mittels eines Digitalen Zwillings als besonders geeignet ermittelt worden ist.

Unabhängig von Optimierungsverfahren ist erfindungsgemäß erkannt worden, dass eine Weiterbildung des erfindungsgemäßen Verfahrens derart, dass der vorgebbare Feuchtegrad aus einem oder mehreren Zuständen gemäß verschiedenen Trocknungsphasen, insbesondere dem Zustand eines teilweise gefüllten Kapillarnetzes und/oder verbleibenden Flüssigkeitsclusters, beispielsweise nach den aus Jana Kumberg et al. (2019). Drying of Lithium-Ion Battery Anodes for Use in High Energy Cells - Influence of Electrode Thickness on Drying Time, Adhesion and Crack Formation. Energy Technology. 7.10.1002/ente.201900722 bekannten Trocknungsphasen C und D als Vorgabe gewählt wird, die bereits besonders vorteilhaft sind, da diese Zustände und deren Eigenschaften sehr gut erforscht sind und daher für eine Implementierung der Erfindung sehr gut geeignet sind. Insbesondere die Zustände C oder D lassen gute Ergebnisse im Zusammenhang mit der Verfahrensweise gemäß Erfindung und/oder deren Weiterbildung erwarten.

Bevorzugt kann das Verfahren gemäß Erfindung derart weiterbildet werden, dass die Dauer des ersten Trocknungsvorgangs und/oder zweiten Trocknungsvorgangs durch eine Steuereinrichtung bestimmt wird. Hierdurch wird eine gleichbleibend akkurate Durchführung, insbesondere im industriellen Umfeld, erreicht.

Alternativ oder ergänzend kann das Verfahren auch derart weitergebildet werden, dass die Dauer des ersten Trocknungsvorgangs und/oder zweiten Trocknungsvorgangs auf Grundlage zumindest eines Signals eines Sensors zur Ermittlung eines aktuellen Feuchtegrades der ersten Paste und/oder zweiten Paste bestimmt wird. Hierdurch kann eine Qualitätsprüfung gewährleistet werden, aber vor allem kann damit eine Rückkopplung erfolgen, welche, vor allem in Verbindung mit der Steuerung, dafür sorgen kann, dass die Trocknungsvorgänge hinsichtlich eines gewünschten Feuchtegrades auf den Punkt genau durchgeführt werden können. Außerdem können spontan auftretende Abweichungen erfasst werden, etwa wie oben genannt, eine spontan auftretende, etwa durch mangelnde Wärmeleitung, nicht ausreichende Trocknung der ersten Paste im Rahmen des zweiten Trocknungsvorgangs.

Insbesondere für den Ausgleich von letztgenanntem spontanem Vorhandensein einer Restfeuchte ist die Weiterbildung des erfindungsgemäßen Verfahrens geeignet, bei dem der zweite Trocknungsvorgang mittels zumindest einem zweiten auf die erste Paste gerichteten Heizstrahler durchgeführt wird.

Eine in die üblichen Fertigungsprozesse integrierbare Weiterbildung ist gegeben, wenn das Verfahren derart weitergebildet wird, dass in einem ersten Teilprozess
a) ein erstes Abwickeln der Metallfolie derart erfolgt,
b) dass der jeweils abgerollte Abschnitt der Metallfolie sukzessive mit dem Abwickeln einem ersten Beschichtungsvorgang einer ersten Seite der Metallfolie mit einer nassen ersten Paste ausgesetzt ist, sowie sukzessive
c) darauffolgend einem erstem Trocknungsvorgang ausgesetzt wird, dem sukzessive ein
d) erstes Aufwickeln des beschichteten und dem ersten Trocknungsvorgang ausgesetzten Abschnitts der Metallfolie folgt, und in einem zweiten Teilprozess
e) ein zweites Abwickeln der beschichteten Metallfolie derart erfolgt,
f) dass der jeweils abgerollte Abschnitt der beschichteten Metallfolie sukzessive mit dem Abwickeln einem zweiten Beschichtungsvorgang einer der ersten Seite gegenüberliegenden zweiten Seite der beschichteten Metallfolie mit einer nassen zweiten Paste ausgesetzt ist, sowie sukzessive
g) darauffolgend einem zweiten Trocknungsvorgang ausgesetzt wird, dem sukzessive ein
h) zweites Aufwickeln des beidseitig beschichteten und dem zweiten Trocknungsvorgang ausgesetzten Abschnitts der Metallfolie folgt.

Durch Verfügbarkeit, guter Steuerbarkeit sowie neben anderen Vorteilen auch guter Präzision ist die Weiterbildung der erfindungsgemäßen Anordnung gekennzeichnet, bei der die erste und/oder zweite Bestrahlungseinrichtung als gerichteter, beispielsweise Infrarotstrahler, Laserstrahler und/oder vergleichbarer Heizstrahler ausgestaltet ist.

Insbesondere für die Implementierung im industriellen Umfeld, vor allem für gleichbleibende Qualität, ist die Weiterbildung der erfindungsgemäßen Anordnung geeignet, bei der durch ein erstes, insbesondere als Prozessor, ausgestaltetes, Modul, das derart ausgestaltet und mit zumindest Teilen von den ersten Teilprozess und zweiten Teilprozess durchführenden Vorrichtungen verbunden ist, dass es zumindest den ersten Trocknungsvorgang und/oder zweiten Trocknungsvorgang steuert.

Insbesondere für eine Rückkopplung und/oder Qualitäts- bzw. Prozessüberwachung ist die Weiterbildung der erfindungsgemäßen Anordnung geeignet, nach der ein erster Sensor zur Feuchtegradermittlung und/oder ein zweiter Sensor zur Feuchtegradermittlung derart ausgestaltet und mit dem ersten Modul verbunden ist, dass das erste Modul auf Grundlage von Signalen des ersten Sensors und/oder zweiten Sensors den Energieeintrag, insbesondere über die Dauer und/oder die Höhe der Heizenergie, des ersten Trocknungsvorgangs und/oder zweiten Trocknungsvorgangs steuert.

Weitere Vorteile und Details der Erfindung werden ausgehend von dem in der Figur 1 und in Figur 2 gezeigten Stand der Technik durch die in Figur 3 dargestellten beziehungsweise angegebenen Ausführungsbeispiele der Erfindung erläutert. Dabei zeigt
- Figur 1: schematisch verschiedene sich beim Beheizen gemäß Stand der Technik ergebende Trocknungsphasen,
- Figur 2: schematisch die nach dem Stand der Technik bekannte Beschichtung von Metallfolien im Rahmen des Herstellungsprozesses von Batteriezellen,

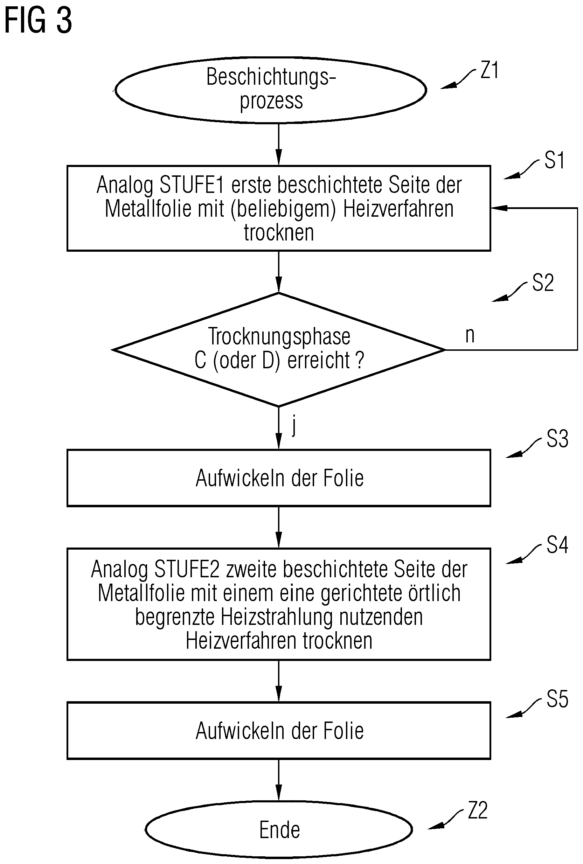

- Figur 3: schematisch als ein Ausführungsbeispiel des erfindungsgemäßen Verfahrens ein Ablaufdiagramm des Beschichtungsprozesses gemäß Erfindung.

Bei den im Folgenden in Figur 3 erläuterten Ausführungsbeispielen handelt es sich um bevorzugte Ausführungsformen und Weiterbildungen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

Gleiche Bezugszeichen haben, sofern sie figurenübergreifend erscheinen, in den verschiedenen Figuren die gleiche Bedeutung.

In Figur 1 ist ein gemäß Jana Kumberg et al. (2019). Drying of Lithium-Ion Battery Anodes for Use in High Energy Cells - Influence of Electrode Thickness on Drying Time, Adhesion and Crack Formation. Energy Technology. 7.10.1002/ente.201900722 aus dem Stand der Technik bekannter Verlauf der experimentellen Trocknung bei der Beschichtung einer Folie dargestellt, dessen auf diese Trocknungsphasen bezogener, über den hier angegebenen Inhalt hinausgehender, zum Verständnis des Vorgangs erforderlicher Inhalt hiermit per Referenz eingebunden ist.

Die Trocknungsexperimente wurden dabei mit einer Paste auf Wasserbasis durchgeführt, bestehend aus Graphit GRAPHIT, Ruß ("Carbon Black") CB und dem Bindemittelsystem Carboxymethylcellulose CMC und Styrol-Butadien-Kautschuk SBR, die gemäß Symbolen der in der Figur 1 gezeigten Legende dargestellt sind, wobei das Wasser als gepunktete, die Symbole ganz oder teilweise umgebende, Fläche schematisch dargestellt ist.

Gemäß den experimentellen Parametern wurden für den Trocknungsschritt eine periodisch bewegte Heizplatte und ein Schlitzdüsentrockner verwendet, und es wurden isotherme Trocknungsbedingungen eingestellt. Die isotherme Trocknungstemperatur wurde so berechnet, dass sie einer bestimmten Trocknungsrate bei einem bestimmten Luftdurchsatz und Taupunkt der Trocknungsluft entsprach und somit der stationären Temperatur eines industriellen Trockners unter denselben Trocknungsbedingungen entsprach, so dass der dargestellte Verlauf der Trocknung als Basis für die Erläuterung des Standes der Technik bei der Produktion von Batteriezellen sowie der erfindungsgemäßen Umgestaltung des Prozesses geeignet ist, auch wenn beim Trocknungsvorgang in der industriellen Fertigung die gezeigten Schritte der Trocknung nicht einzeln implementiert werden, sondern sich aus der Physik des Trocknungsvorganges ergeben, wenn die nasse Folie einer konstanten Heizleistung ausgesetzt wird. Dieses Beheizen gemäß Stand der Technik erfolgt, selbst wenn es mit unterschiedlichen Heizzonen, beispielsweise durch Heißluftöfen, bei denen mehrstufige Heizphasen erfolgten, durchgeführt wird, mit Hilfe eines einzelnen Ofens, bei dem über die Länge von typischerweise 80m mehrere Wärmezonen des Ofens verteilt sind.

In der Figur 1 ist zu erkennen, dass in einer ersten Trocknungsphase A vornehmlich das flüssige Lösemittel direkt verdampft (angedeutet durch die Molare Masse mₛₒₗᵥₑₙₜ), was zu einer Volumenreduktion führt. Sobald genug Flüssigkeit verdampft wurde, bilden die festen Bestandteile (Partikel) in der zweiten Trocknungsphase B eine Matrix, die in ihren Zwischenräumen von der restlichen Flüssigkeit durchtränkt ist.

Zu erkennen ist ferner, dass in der dritten Trocknungsphase C und vierten Trocknungsphase D keine weitere Schrumpfung mehr erfolgt. Ferner unterscheidet sich die thermische Reaktion der Masse mₛₒₗᵥₑₙₜ vom anfänglichen Verhalten in der ersten Trocknungsphase A und der zweiten Trocknungsphase B. Von einem reinen Verdampfen hin zu einem kapillaren Transport bzw. einer Diffusion der Flüssigkeit. In der weiteren Folge wechselt der Mechanismus des Wärmetransports von der oberflächlichen Wärmeeinwirkung, und das Trocknungsverhalten ändert sich erneut, bis zuletzt in der fünften Trocknungsphase E ein getrockneter Film übrigbleibt.

Wie angegeben können diese Trocknungsphasen A...E als bei der Beschichtung von Metallfolien im Rahmen der Herstellung von Batteriezellen gegeben angenommen werden.

In Figur 2 ist schematisch dazu dieser Beschichtungsprozess dargestellt.

Es ist zu erkennen, dass, wie bei handelsüblichen Batteriezellen die Regel, die Metallfolien beidseitig mit Aktivmaterial beschichtet werden.

Mit einigen Ausnahmen erfolgt dies üblicherweise in einem zweistufigen Verfahren, bei dem zunächst eine Seite beschichtet und getrocknet wird, dann aufgewickelt und später die einseitig beschichtete Folie von der anderen Seite erneut beschichtet wird.

In Figur 2 ist nun auf der linken Seite die erste Stufe STUFE1 schematisch dargestellt. Zu erkennen ist, wie eine erste Rolle ROLLE1, auf die eine unbeschichtete Metallfolie aufgewickelt ist, abgewickelt und die Folie zunächst durch einen schematisch angedeuteten Beschichter BESCHICHTER beschichtet und durch einen schematisch angedeuteten Trockner TROCKNER getrocknet wird, bevor sie auf eine zweite Rolle ROLLE2 wieder aufgerollt wird.

Auf der rechten Seite der Figur 2 ist nun zu erkennen, dass in einer zweiten Stufe STUFE2 die zweite Rolle ROLLE2 mit umgekehrter Orientierung erneut abgewickelt wird, so dass die frühere Unterseite der Folie von dem Beschichter BESCHICHTER beschichtet und nach einer Trocknung durch den Trockner TROCKNER auf eine dritte Rolle ROLLE3 aufgewickelt wird.

Die Trocknung erfolgt also sequenziell, wobei eine Übertrocknung der zuerst beschichteten Seite akzeptiert wird.

Ausgehend von diesem Status quo soll nun anhand eines Ausführungsbeispiels des erfindungsgemäßen Verfahrens sowie Ausführungsbeispielen das Verfahren durchführender Anordnungen bzw. Mittel die Erfindung erläutert werden.

Erfinderseitig wurde erkannt, dass es an diesem Verfahren nachteilig ist, dass das Material einem übermäßigen Trocknungsprozess ausgesetzt sein kann, da diese Übertrocknung in Kauf genommen wird und damit zum einen zu einer Energieverschwendung und zum anderen zu potenzieller Materialschädigung sowie einer erhöhten Fragilität des Materials führen kann.

Vor diesem Hintergrund beruhen die Ausführungsbeispiele des erfindungsgemäßen Verfahrens bzw. die die Ausführungsbeispiele der erfindungsgemäßen Vorrichtung betreffenden Mittel zur Durchführung des Verfahrens auf den im Folgenden beschriebenen Merkmalen und erfindungsgemäßen Gedanken:
Gemäß der Erfindung wird der Trocknungsvorgang, welcher heute üblicherweise in einem Konvektionsofen TROCKNER mit allseitig homogener Wärmeverteilung stattfindet, zumindest in Teilen des Prozesses dahingehend erfindungsgemäß verbessert, dass er durch gerichtete und/oder fein steuerbare Heizelemente, wie beispielsweise Infrarotstrahler oder Laserstrahler realisiert und durchgeführt wird.

Diese erfindungsgemäß veränderten Trocknungsheizsysteme bringen die Wärmeenergie zum größeren Teil an der Seite und nur an dem Ort ein, der tatsächlich getrocknet werden muss. Dabei spielen Wärmeverluste durch Wärmeleitung im Material und die erwärmte Umgebungsluft beim Einsatz der Erfindung eine untergeordnete Rolle.

Die erfindungsgemäße Verfahrensweise setzt die Kenntnis über die 5 gemäß Stand der Technik bekannten Trocknungsphasen A...E gezielt ein und setzt als Mittel, um dies systematisch und planmäßig zu nutzen, beispielsweise eine geeignete Sensorik zur Ermittlung des aktuellen Trocknungszustandes ein.

Gemeinsam mit den örtlich und direktional begrenzt einwirkenden Heizsystemen, lässt sich eine erfindungsgemäße, weitreichende optimierte Trocknung darstellen, die bei signifikant reduziertem Energieverbrauch auch eine materialschonendere Trocknung erlaubt.

Dazu wird ausgehend von einem ersten Zustand Z1, der den laufenden Beschichtungsprozess darstellt, in einem ersten Schritt S1 analog zur ersten Stufe STUFE1 des Beschichtungsprozesses die erste beschichtete Seite der Metallfolie, nachdem sie, beispielsweise von der ersten Rolle ROLLE1, abgewickelt und vom Beschichter BESCHICHTER beschichtet worden ist, mit einem beliebigen Heizverfahren vorgetrocknet.

Die Batterieherstellung durchläuft vor und nach den hier beschriebenen Teilprozessen weitere Schritte. Die Erfindung betrifft die Teilprozesse im Rahmen der Beschichtung und Trocknung und verbessert allein diese, hat aber im Ergebnis vorteilhafte Wirkung auf den Batterieherstellungsprozess insgesamt, insbesondere weil der Energiebedarf und die Eigenschaften der beschichteten Folie und somit Ausschussrate verbessert werden.

Die Beschichtung der Metallfolie wird grundsätzlich mit einer oder, beispielsweise um der eingangs beschriebenen Bindermigration zu begegnen, mehreren dünnen nassen Pasten eines aktiven Materials durchgeführt. Das aktive Material variiert dabei je nach Art der Batterie. In Lithium-Ionen-Batterien besteht die Beschichtung beispielsweise aus einer Mischung von Lithiumverbindungen.

Dazu kann beispielweise ein Konvektionsofen oder gerichteter Strahler oder andere, insbesondere hierzu bereits übliche Heizkörper TROCKNER genutzt werden.

Dieses Vortrocknen erfolgt so lange bis sich ein Zustand gemäß der Trocknungsphase C oder D einstellt. Welcher dieses ist, kann je nach erzeugtem Batterietyp und/oder anderen Parametern in Verbindung mit der Batterie und/oder der Herstellungsweise vorbestimmt sein.

Hierzu wird in einem zweiten Schritt S2 mittels des oben genannten Sensors geprüft, ob die vorbestimmte Trocknungsphase schon erreicht worden ist. Ist das noch nicht der Fall, wird weiter geheizt, während für den Fall, dass sie erreicht worden ist, das Verfahren in einen dritten Schritt S3 wechselt.

Zu diesem Zeitpunkt ist davon auszugehen, dass das Material also im Sinne der Erfindung hinreichend getrocknet wurde. Im Sinne der Erfindung bedeutet, dass es so vorgetrocknet ist, dass es bereits gute Haft- und Stabilitätseigenschaften hat aber noch nicht so trocken ist, um elektrisch betrieben zu werden.

In diesem Zustand klebt es also beim Aufrollen nicht mehr an einer Rolle, behält aber gleichzeitig eine gewisse Formbarkeit, so dass die Folie in dem dritten Schritt S2, beispielsweise auf die zweite Rolle ROLLE2, aufgewickelt werden kann und beim Aufwickeln entstehende Biegeradien keine Schädigung zur Folge haben.

Im dem darauffolgenden vierten Schritt S4, der analog der zweiten Stufe STUFE2 des Beschichtungsprozesses durchgeführt wird, bei dem die Beschichtung der zweiten Seite stattfindet, erfolgt die Trocknung der zweiten Seite erfindungsgemäß mit einem gerichteten, örtlich eingegrenzten Verfahren, d.h. durch einen Ofen mit gerichtetem Energieeintrag.

Dabei wird durch das Ausführungsbeispiel der Erfindung erreicht, dass die zuerst beschichtete Seite entweder gar nicht erwärmt oder nur geringfügig durch Wärmeleitung erhitzt wird.

Diese indirekte Erhitzung kann zudem auf vorteilhafte Weise dazu genutzt werden, um die noch vorhandene Restfeuchte (die erste Seite wurde ja nur bis in Phase C oder D getrocknet) zu entfernen.

Alternativ oder ergänzend kann die Restfeuchte der ersten Schicht durch einen zweiten, gerichteten Energieeintrag, beispielsweise als weiteren Ofen implementierten InfrarotStrahler, zeitgleich oder minimal zeitlich versetzt zur Trocknung der zweiten Beschichtung im vierten Schritt S4 auch die erste Beschichtung final trocknen.

Hierzu kann ein weiterer und/oder derselbe Sensor eingesetzt werden, um den Trocknungsgrad zu bestimmen.

Das Verfahren kann aber durch geeignete Optimierung, beispielsweise durch Simulation und/oder unter Nutzung eines Digitalen Zwillings so optimiert sein, dass mit dem Abschluss der Trocknung im vierten Schritt S4 automatisch auch die erste Schicht vollständig getrocknet ist. Selbstverständlich kann eine Optimierung des ersten Schrittes S1 derart erfolgen, dass ein Sensor nicht notwendig ist, sondern, beispielsweise durch eine Steuerung des Prozesses nach Ablauf einer optimalen Trocknungszeit von einem Erreichen der gewünschten festgelegten Trocknungsphase (C oder D) ausgegangen werden kann.

Ist die vollständige Trocknung erreicht, kann die Folie, beispielsweise auf die dritte Rolle ROLLE3, in einem fünften Schritt S5 aufgerollt werden und der Beschichtungsprozess erreicht seinen Endzustand in einem zweiten Zustand Z2, aus dem er zur Herstellung einer neuen Folie in den ersten Zustand Z1 gebracht werden kann.

Die Erfindung ist nicht auf diese Ausführungsbeispiele des Verfahrens und des Ausführungsbeispiels der Vorrichtung bzw. der genannten Mittel zur Durchführung des Verfahrens beschränkt. Vielmehr sind alle Kombinationen aller oder einzelner Merkmale und/oder Weiterbildungen, die unter den Schutzbereich der Erfindung fallen und, insbesondere die Elemente
- Kombination einer zumindest in einer Phase der Trocknung genutzten gerichteten, örtlich begrenzten Heizquelle mit Abstimmung der einwirkenden Heizenergie auf vorbestimmte Trocknungsphasen gemäß bekanntem Trocknungsverhalten
- ein oder mehrere geeignete Sensoren zur Ermittlung des Trocknungszustandes
- Steuerung zur Berechnung der notwendigen Energie und/oder Dauer im ersten (analog der ersten Stufe STUFE1) und zweiten (analog der zweiten Stufe STUFE2) Trocknungsvorgang
aufweisen und die Vorteile haben, dass das Übertrocknen der zuerst getrockneten Seite reduziert oder vollständig verhindert wird, sowie die Schädigung durch Aufwickeln des bereits getrockneten Materials reduziert und insgesamt der Energieeinsatz auf das Nötigste beschränkt wird.

Soweit oben Ausdrücke verwendet wurden, die ein grammatikalisches Geschlecht und/oder andere zur Unterscheidung von Menschen geeignete Merkmale zeigen, implizieren oder als solche wahrgenommen werden können, gilt, dass diese Ausdrücke nicht trennend, sondern inklusiv verwendet wurden, d.h. dass alle Menschen - unabhängig von gegebenen, selbst angenommenen oder vermuteten individuellen Merkmalen - als gleichwertig betrachtet werden.

## Patentansprüche

1. Verfahren zur Beschichtung einer Metallfolie im Rahmen eines Batterieherstellungsprozesses, bei dem in einem ersten Teilprozess zur Beschichtung einer ersten Seite der Metallfolie mit zumindest einer nassen ersten Paste, nach Beschichtung mit der ersten Paste ein erster Trocknungsvorgang derart erfolgt, dass die Trocknung der ersten Paste der beschichteten Metallfolie kurz vor Erreichen einer vollständigen Trocknung abgebrochen wird und in einem zweiten Teilprozess zur Beschichtung einer der ersten Seite gegenüberliegenden zweite Seite der Metallfolie mit zumindest einer nassen zweiten Paste, nach Beschichtung ein zweiter Trocknungsvorgang derart durchgeführt wird, dass die erste Paste derart gerichtet beheizt wird, dass die erste Paste und die zweite Paste vollständig getrocknet werden.

2. Verfahren nach dem vorhergehenden Anspruch,
**dadurch gekennzeichnet, dass** das gerichtete Beheizen derart durchgeführt wird, dass ein auf die erste Paste örtlich und/oder direktional begrenzter erster Energieeintrag erfolgt.

3. Verfahren nach dem vorhergehenden Anspruch,
**dadurch gekennzeichnet, dass** der erste Energieeintrag durch eine erste gerichtete Bestrahlungseinrichtung, insbesondere mittels eines Infrarotstrahlers, Laserstrahler und vergleichbarer Strahler, erfolgt.

4. Verfahren nach dem vorhergehenden Anspruch,
**dadurch gekennzeichnet, dass** zumindest zeitnah, insbesondere zeitgleich zum ersten Energieeintrag, ein zweiter Energieeintrag durch eine zweite auf die erste Paste gerichtete Bestrahlungseinrichtung, insbesondere mittels eines Infrarotstrahlers, Laserstrahler und vergleichbarer Strahler, insbesondere örtlich und/oder direktional begrenzt, erfolgt.

5. Verfahren nach dem vorhergehenden Anspruch,
**dadurch gekennzeichnet, dass** der erste Trocknungsvorgang bei Erreichen eines vorgebbaren Feuchtegrads abgebrochen wird.

6. Verfahren nach dem vorhergehenden Anspruch,
**dadurch gekennzeichnet, dass** der vorgebbare Feuchtegrad aus einem oder mehreren Zuständen gemäß verschiedenen Trocknungsphasen, insbesondere dem Zustand eines teilweise gefüllten Kapillarnetzes und/oder verbleibenden Flüssigkeitsclusters, beispielsweise nach den aus Jana Kumberg et al. (2019). Drying of Lithium-Ion Battery Anodes for Use in High Energy Cells - Influence of Electrode Thickness on Drying Time, Adhesion and Crack Formation. Energy Technology. 7.10.1002/ente.201900722 bekannten Trocknungsphasen C und D, als Vorgabe gewählt wird.

7. Verfahren nach einem der vorhergehenden Ansprüche,
**dadurch gekennzeichnet, dass** die Dauer des ersten Trocknungsvorgangs und/oder zweiten Trocknungsvorgangs durch eine Steuereinrichtung bestimmt wird.

8. Verfahren nach einem der vorhergehenden Ansprüche,
**dadurch gekennzeichnet, dass** die Dauer des ersten Trocknungsvorgangs und/oder zweiten Trocknungsvorgangs auf Grundlage zumindest eines Signals eines Sensors zur Ermittlung eines aktuellen Feuchtegrades der ersten Paste und/oder zweiten Paste bestimmt wird.

9. Verfahren nach dem vorhergehenden Anspruch,
**dadurch gekennzeichnet, dass** der zweite Trocknungsvorgang mittels zumindest einem zweiten auf die erste Paste gerichteten Heizstrahler durchgeführt wird.

10. Verfahren nach einem der vorhergehenden Ansprüche, **dadurch gekennzeichnet, dass** in einem ersten Teilprozess
a) ein erstes Abwickeln der Metallfolie derart erfolgt,
b) dass der jeweils abgerollte Abschnitt der Metallfolie sukzessive mit dem Abwickeln einem ersten Beschichtungsvorgang einer ersten Seite der Metallfolie mit einer nassen ersten Paste ausgesetzt ist, sowie sukzessive
c) darauffolgend einem ersten Trocknungsvorgang ausgesetzt wird, dem sukzessive ein
d) erstes Aufwickeln des beschichteten und dem ersten Trocknungsvorgang ausgesetzten Abschnitts der Metallfolie folgt, und in einem zweiten Teilprozess
e) ein zweites Abwickeln der beschichteten Metallfolie derart erfolgt,
f) dass der jeweils abgerollte Abschnitt der beschichteten Metallfolie sukzessive mit dem Abwickeln einem zweiten Beschichtungsvorgang einer der ersten Seite gegenüberliegenden zweiten Seite der beschichteten Metallfolie mit einer nassen zweiten Paste ausgesetzt ist, sowie sukzessive
g) darauffolgend einem zweiten Trocknungsvorgang ausgesetzt wird, dem sukzessive ein
h) zweites Aufwickeln des beidseitig beschichteten und dem zweiten Trocknungsvorgang ausgesetzten Abschnitts der Metallfolie folgt.

11. Anordnung zur Durchführung der Beschichtung einer Metallfolie im Rahmen eines Batterieherstellungsprozesses, gekennzeichnet mit Mitteln zur Durchführung des Verfahrens nach einem der vorhergehenden Ansprüche.

12. Anordnung nach dem vorhergehenden Anspruch,
**dadurch gekennzeichnet, dass** die erste und/oder zweite Bestrahlungseinrichtung als gerichteter, beispielsweise Infrarotstrahler, Laserstrahler und/oder verbgleichbarer Heizstrahler ausgestaltet ist.

13. Anordnung nach einem der beiden vorhergehenden Ansprüche, **gekennzeichnet durch** ein erstes, insbesondere als Prozessor ausgestaltetes, Modul, das derart ausgestaltet und mit zumindest Teilen von den ersten Teilprozess und zweiten Teilprozess durchführenden Vorrichtungen verbunden ist, dass es zumindest den ersten Trocknungsvorgang und/oder zweiten Trocknungsvorgang steuert.

14. Anordnung nach dem vorhergehenden Anspruch,
**dadurch gekennzeichnet, dass** ein erster Sensor zur Feuchtegradermittlung und/oder ein zweiter Sensor zur Feuchtegradermittlung derart ausgestaltet und mit dem ersten Modul verbunden ist, dass das erste Modul auf Grundlage von Signalen des ersten Sensors und/oder zweiten Sensors den Energieeintrag, insbesondere über die Dauer und/oder die Höhe der Heizenergie, des ersten Trocknungsvorgangs und/oder zweiten Trocknungsvorgangs steuert.
